# EUROPÄISCHE PATENTSCHRIFT

(11) **EP 3 073 337 B1**
(45) Veröffentlichungstag und Bekanntmachung des Hinweises auf die Patenterteilung: **15.11.2023**
(21) Anmeldenummer: 15000856.3
(22) Anmeldetag: 24.03.2015
(51) Int. Cl.: G05B 19/042, G05B 19/404

(54) **STELLVORRICHTUNG FÜR ARMATUREN MIT MESS- UND VERARBEITUNGSEINRICHTUNG FÜR KÖRPERSCHALL DER ARMATUR**
ACTUATING DEVICE FOR FITTINGS WITH MEASUREMENT AND PROCESSING DEVICE FOR THE FITTINGS IMPACT SOUND
DISPOSITIF DE RÉGLAGE POUR ARMATURES DOTÉ DE DISPOSITIF DE TRAITEMENT ET DE MESURE DE BRUIT DU CORPS DE L'ARMATURE

(43) Veröffentlichungstag der Anmeldung: 28.09.2016
(73) Patentinhaber: Sacharowitz, Fabian, 10777 Berlin (DE); Sacharowitz, Steffen, 10967 Berlin (DE); Sacharowitz, Axel, 10829 Berlin (DE)
(72) Erfinder: Sacharowitz, Fabian, 10777 Berlin (DE); Sacharowitz, Steffen, 10967 Berlin (DE); Sacharowitz, Axel, 10829 Berlin (DE)
(74) Vertreter: Bittner, Thomas L.

(56) Entgegenhaltungen:
- GB-A- 2 277 151
- US-A- 5 407 265
- US-A1- 2003 182 071
- US-A1- 2007 185 659
- US-A1- 2008 121 290
- US-A1- 2010 104 388
- US-A1- 2013 234 642
- HIRSCH U ET AL: "Structure and parameter optimization of an active adsorber for decentralized vibration control", PROCEEDINGS OF THE INTERNATIONAL CONFERENCE ON ROBOTICS AND AUTOMATION NICE, MAY 12 - 14, 1992; [PROCEEDINGS OF THE INTERNATIONAL CONFERENCE ON ROBOTICS AND AUTOMATION], LOS ALAMITOS, IEEE COMP. SOC. PRESS, US, Bd. CONF. 8, 12. Mai 1992 (1992-05-12), Seiten 670-675, XP010027912, DOI: 10.1109/ROBOT.1992.220290 ISBN: 978-0-8186-2720-0

## Beschreibung

Zum Unterbrechen des Mediumflusses in einer Rohrleitung in Wasser-, Abwasser-, Gas-, Fernwärme-, Fernkälte- und Öl-Transportleitungen werden in diese Armaturen (AR) eingebaut. Insbesondere bei nur unzureichender Wartung kann sich der Zustand einer Armatur (AR) durch Ablagerungen (sogenannte Inkrustationen), mechanische Defekte, bspw. an Spindel, Gehäuse oder Getriebe, und Materialverschleiß verschlechtern. Dies führt mit der Zeit dazu, dass Armaturen (AR) schwergängig werden. Das bedeutet, dass sie sich nur noch mit erhöhtem Betätigungsmoment bedienen lassen. Im Extremfall werden Armaturen (AR) unbedienbar. Spätestens dann ist ein Austausch unerlässlich.

Das Öffnen und Schließen von Armaturen (AR) in Rohrleitungen der Wasser-, Gas-, Fernwärme- und Fernkälteversorgung bzw. der Abwasserentsorgung sowie in Gas- und Öl-Transportleitungen mit Nennweiten DN 50 oder größer, insbesondere größer DN 100, erfolgt manuell mittels sogenannter Schieberschlüssel, bspw. nach DIN 3210, oder mittels Stellvorrichtungen. Stellvorrichtungen können dauerhaft einer Armatur (AR) zugeordnete elektrisch oder pneumatisch angetriebene Stellantriebe (SA) oder mobile elektrische, pneumatisch oder mit Benzin bzw. Diesel angetriebene Drehgeräte (AIG), auch Schieberdrehgeräte genannt, sein.

Nachteilig an dem Stand der Technik entsprechenden Stellvorrichtungen ist, dass sie den Zustand einer Armatur (AR) entweder gar nicht oder nur in Bezug auf das Stellmoment bestimmen können. Eine qualitative Ableitung des Zustands der Armatur ausschließlich über das zum Stellen erforderliche Drehmoment (Stellmoment) ist nicht ausreichend. Insbesondere lässt sich dadurch nicht zuverlässig bestimmen, ob eine Armatur (AR), die in ihre entsprechende Endlage gefahren wurde, auch tatsächlich dicht schließt. Außerdem sind Zustandsänderungen nicht erkennbar, die noch nicht zu einer Erhöhung des Stellmomentes geführt haben. Schließlich lassen sich keine Aussagen über Flussrichtung, Flussgeschwindigkeit sowie Armaturentyp und -hersteller ableiten.

Das Dokument US 2010/104388 A1 offenbart ein Schwingungsunterdrückungsverfahren und eine Schwingungsunterdrückungsvorrichtung. Nachdem ein Werkzeug an einer Hauptspindel befestigt wurde, wird ein Modalparameter des Werkzeugs oder eines Werkstücks berechnet. Danach wird eine Beziehung zwischen Ratterfrequenz und Phasendifferenz als Näherungsformel basierend auf dem erhaltenen Modalparameter und den Bearbeitungsbedingungen berechnet. Wenn nach Beginn der Bearbeitung eine Rattervibration auftritt, wird unter Verwendung der Näherungsformel eine Ratterfrequenz erhalten, die einer Zielphasendifferenz entspricht, und basierend auf der erhaltenen Ratterfrequenz, der Anzahl der Werkzeugnuten und der Drehzahl der Hauptspindel die optimale Drehzahl ist berechnet. Die Drehzahl der Hauptspindel wird dann entsprechend der erhaltenen optimalen Drehzahl geändert.

In dem Dokument US 5 407 265 A wird eine Fehlererkennung in einem betriebsbereiten Schneidwerkzeug unter Verwendung einer Frequenzbereichsanalyse der Schwingung des Schneidwerkzeugs offenbart. Ein Signal wird basierend auf der Vibration des Werkzeugs während seines Betriebs erzeugt, um die Energie des Signals in mehreren Frequenzbändern der Signalkomponenten zu bestimmen. Die Energie des Signals in jedem der mehreren Frequenzbänder wird mit entsprechenden Schwellenwerten verglichen, um ein Werkzeugausfallsignal zu erzeugen, wenn die Energie des Signals in einer vorgewählten Anzahl von Frequenzbändern die entsprechenden Schwellenwerte für einen vorbestimmten Zeitraum überschreitet. In einer zweiten Ausführungsform wird zusätzlich zur Frequenzbereichsanalyse eine Zeitbereichsanalyse des auf der Vibration des Werkzeugs erzeugten Signals verwendet. Das gemittelte Signal wird mit einem Schwellensignal verglichen, um ein Werkzeugfehlersignal zu erzeugen, wenn sowohl die Energie des Signals in einer vorgewählten Anzahl von Frequenzbändern die entsprechenden Schwellenwerte überschreitet als auch das gemittelte Signal das Schwellensignal überschreitet.

Das Dokument GB 2 277 151 A offenbart ein automatisches System zur Überwachung des Maschinenzustands, das die Verwendung von Schwingungsanalyse und selbstorganisierenden neuronalen Kartennetzen kombiniert, um die Fehlererkennung und -diagnose mit Trainingsbeispielen zu erleichtern, die nur in gutem Zustand von der Maschine stammen. Komponentenspezifikationsdaten werden verwendet, um einen Satz von Schlüsselfrequenzen zu bestimmen, deren Amplituden als Eingangsparameter des selbstorganisierenden Kartennetzwerks verwendet werden. Die Netzwerkausgänge liegen in Form einzelner Abstandswerte von jeder der Schlüsselfrequenzen vor. Der Steuercomputer verwendet diese Informationen, um Fehler in der untersuchten Maschine zu erkennen und zu diagnostizieren.

Der Artikel "Structure and parameter optimization of an active absorber for decentralized vibration control" von Hirsch et al. in "PROCEEDINGS OF THE INTERNATIONAL CONFERENCE ON RO-BOTICS AND AUTOMATION" vom 12. bis 14. Mai 1992 auf den Seiten 670-675 offenbart, dass die Einführung von Leichtbauwerkstoffen und getriebelosen Direktantrieben ein Muss ist, um die Grundgeschwindigkeit von Robotern oder vergleichbaren mechanischen Systemen wesentlich zu erhöhen. Ein schlanker und schneller Leichtbauroboter führt jedoch insbesondere bei zeitoptimalen Punkt-zu-Punkt-Bewegungen zu störenden Strukturschwingungen, die beseitigt werden müssen. Die Kompensation der Schwingungen allein durch die modellbasierte Steuerung der Gelenke ist aufgrund der begrenzten Bandbreite der Motoren nicht sinnvoll. In diesem Artikel wird ein neues mechatronisches Konzept zur dezentralen Schwingungskontrolle mittels eines aktiven Tilgers vorgestellt. Um eine hohe dynamische Genauigkeit ohne Spill-over-Effekte zu erreichen, ist eine integrierte modellbasierte Gesamtoptimierung sowohl der Hard- und Softwareparameter als auch der lokalen Platzierung des Absorbers an den sensibelsten Punkten der mechanischen Struktur erforderlich. Im Rahmen dieser Arbeit werden geeignete Methoden sowohl für die experimentelle Modellidentifikation als auch für die Struktur- und Parameteroptimierung vorgestellt. Die Leistungsfähigkeit des Mechatronikkonzepts, das auf einen Roboter vom Typ SCARA angewandt wird, wird anhand von Experimental- und Simulationsergebnissen demonstriert.

Ein Verfahren und eine Anordnung zur Diagnose eines endgültigen Steuerelements, das durch einen pneumatisch betätigten Betätigungsmechanismus unter der Steuerung einer Steuervorrichtung betätigt wird und bei herkömmlicher Verwendung akustische Signale aussendet, wird in dem Dokument US 2008/121290 A1 offenbart. Es wird vorgeschlagen, akustische Signale zu erfassen, die in das pneumatische System des Betätigungsmechanismus zurückgeführt werden, und daraus die Statusdaten des Stellglieds abzuleiten. Zu diesem Zweck ist ein akustischer Sensor in der Pneumatik-Flüssigkeits-Zuleitung des Betätigungsmechanismus angeordnet, wobei der akustische Sensor elektrisch mit einem Analysegerät verbunden ist. Als akustischer Sensor wird ein Drucksensor verwendet.

Das Dokument US 2007/185659 A1 offenbart eine Vorrichtung zum Bestimmen, ob eine mechanische Komponente in einem Analysegerät für chemische Zusammensetzung defekt ist, die Vorrichtung, die eine mechanische Komponente, einen mit der mechanischen Komponente gekoppelten Wandler, den zur Messung einer mechanischen Komponenteneigenschaft konfigurierten Wandler und einen mit dem Wandler in Kommunikation stehenden Prozessor enthält; der Prozessor, der konfiguriert ist, um zu bestimmen, ob die mechanische Komponente defekt ist, unter Verwendung der Eigenschaft der mechanischen Komponente. In einer Ausführungsform ist der Prozessor konfiguriert, um die Eigenschaft der mechanischen Komponente mit einer Grundlinie zu vergleichen, um zu bestimmen, ob die Eigenschaft der mechanischen Komponente innerhalb eines vorbestimmten Bereichs der Grundlinie liegt, und um auf die Bestimmung zu reagieren, dass die Eigenschaft der mechanischen Komponente nicht innerhalb des vorbestimmten Bereichs von liegt Zeigen Sie anhand der Grundlinie an, dass die mechanische Komponente defekt ist. In anderen Ausführungsformen ist die mechanische Komponente ein Ventil und die Vorrichtung ist in einen Analysator für die chemische Zusammensetzung eingebaut. Ebenfalls offenbart ist ein Verfahren zum Bestimmen, ob eine mechanische Komponente in einem Analysegerät für chemische Zusammensetzung defekt ist.

Um den Durchfluss durch eine Rohrleitung zu bestimmen, sind externe Durchflussmessgeräte erforderlich, die selbständig mit Energie aus dem Stromnetz oder einer Batterie versorgt und in die Prozessleittechnik eingebunden werden müssen. Daneben sind tragbare Schwingungsmessgeräte bekannt, die an die Bedienstelle einer Armatur (AR) gehalten werden, um aus den angezeigten Schwingungen bzw. Schwingungsamplituden des Körperschalls Rückschlüsse auf den dichten Schluss der Armatur zu gewinnen. Fest installierbare Schwingungsmessgeräte (bspw. Beschleunigungssensoren, Körperschallmikrofone oder Piezokristalle) erfordern durchweg eine mehr oder weniger aufwendige externe Auswertungseinheit, die insbesondere an Armaturen in Versorgungsnetzen regelmäßig nicht verfügbar ist.

Stellvorrichtungen, die selbst über die Eigenschaften verfügen, Schwingungen zu messen die von der Armatur (AR) stammen und diese intern auszuwerten, zu verarbeiten und direkt oder über eine übergeordnete Instanz in einem Prozessleitsystem an einen Bediener weiterzuleiten, sind bislang nicht bekannt.

Die Aufgabe wird durch eine Stellvorrichtung für Armaturen (AR) in Versorgungsleitungen gelöst, insbesondere einen Stellantrieb (SA) oder ein mobiles Drehgerät (AIG), die einen Antrieb, eine Steuereinrichtung zur Steuerung des Antriebs sowie einen Körperschall-Aufnehmer (1) zur Messung des Körperschalls beinhaltet der entsteht, wenn ein Medium durch die Armatur (AR) fließt oder die Armatur (AR) gestellt wird und die darüber hinaus über eine Verarbeitungseinrichtung (6) zur Auswertung des Signals des Körperschall-Aufnehmers verfügt.

Die Erfindung betrifft eine Stellvorrichtung für Armaturen nach Anspruch 1 und ein Verfahren nach Anspruch 11. Bevorzugte Ausführungsformen sind in den abhängigen Ansprüchen definiert.

Eine derartige Stellvorrichtung ist, mittels Messung und interne Analyse des von der Armatur übertragenen Körperschalls in den Fällen:
- Armatur geöffnet
- Armatur befindet sich in einer Zwischenstellung
- Armatur wird gestellt
- Armatur ist nahezu geschlossen
- Armatur ist geschlossen
in der Lage, folgende Sachverhalte getrennt oder in Kombination zu detektieren, anzuzeigen bzw. zu übermitteln und ggf. zusätzlich davon abhängige Stellvorgänge autonom durchzuführen:
- Unterschreiten einer als hinreichend erachteten Leckrate unabhängig von der Fließrichtung beim Schließen der Armatur
- Leckrate vorhanden, Armatur nicht dicht geschlossen
- Qualitative Messung des Leckstroms
- Fließrichtung
- Qualitative Messung des Durchflusses in jedem Öffnungsgrad der Armatur
- Zustand der Armatur; das bedeutet, dass zwischen dem Zustand Armatur in Ordnung und defekt sowie verschiedenen Schadensbildern unterschieden werden kann
- Typ, Hersteller, Baujahr der Armatur.

Wenn eine Armatur (AR) geschlossen wird, nimmt der Volumenstrom ab, die Strömungsgeschwindigkeit im verbleibenden Spalt aber zu. Ab einer spezifischen Geschwindigkeit löst sich die Strömung von der Wand und es kommt lokal zu Wirbelbildung und bei Flüssigkeiten ggf. zu Kavitation. Diese Strömungsablösung ist der Beginn eines labilen Strömungsverhaltens, das durch Wirbelablösung und evtl. Zusammenfallen von Kavitationsblasen zu einer erheblichen, breitbandigen Schallemission führt. Diese Erscheinung ist unabhängig von Bauform und Zustand einer Armatur (AR) immer unterhalb einer von Druck und Medium abhängigen Restspaltbreite wahrzunehmen, die sich aus den Gesetzen der Strömungsmechanik ergibt. Der Effekt ist geeignet, das vollständige Schließen einer Armatur (AR) zu überwachen, denn die Schallemission hört erst auf, wenn beim Schließen kein Medium (gasförmig oder flüssig) mehr durch einen Restspalt strömt. Die labile Strömung und damit die Schallemission erfolgt vom Randbereich des Spaltes. Damit ist die Einkoppelung des entstehenden Schalls in die Wand der Armatur und die Rohrwand gegeben.

Das durch eine beliebig weit geöffnete, nicht bewegte Armatur hindurchfließende Medium verursacht auch bei stabilem, also weitgehend laminarem, Strömungsverhalten Schwingungen der Armatur, die freilich eine erheblich geringere Amplitude aufweisen. Diese Schwingungen entstehen durch lokale Turbulenzen an Kanten, Spalten, Ablagerungen, etc.; sie hängen also von der Geometrie der Armatur und der Strömungsgeschwindigkeit ab.

In beiden Fällen handelt es sich um ein breitbandiges Schwingungsphänomen. Die entstehende Schwingungsenergie kann aber durch lokale Volumen- oder andere Resonanzen gefiltert werden. Das führt ggf. zu merkbaren "Färbungen" des Frequenzspektrums. Resonanzen werden u. U. zu Oberschwingungen angeregt, so dass ein Spektrum mit Obertönen und mit der Ordnung abnehmender Amplitude entstehen kann. Zudem ist die Dämpfung frequenzabhängig, was zur Folge hat, dass einzelne Frequenzlinien je nach Geometrie mehr oder weniger unscharf auftreten. Insbesondere Ablagerungen sollten zu erhöhter Dämpfung führen. Ein Spektrum mit vergleichsweise definierten Frequenzlinien lässt daher eher auf eine "saubere" Armatur schließen. Da für jede vorhandene Resonanz durch den Volumenstrom Anregungsenergie zur Verfügung steht, zeigt jede Armatur (AR) ein charakteristisches Schwingungsspektrum. Insofern liefern unterschiedliche Armaturtypen, -nennweiten, -fabrikate und sogar unterschiedliche Baujahre der gleichen Armatur (AR) (Nennweite, Typ) desselben Herstellers durch leicht veränderte Konstruktion bei hinreichend feiner Analyse zwangsläufig unterschiedliche Schwingungsspektren.

Auch beim Stellen einer Armatur (AR) wird diese zwangsläufig durch die unvermeidliche mechanische Reibung beim Betätigen der Armatur sowie durch Schwingungen des Drehantriebs zu eigenen Schwingungen angeregt. Für diese Schwingungen gelten die oben (Z. 63 - 92) dargestellten Sachverhalte entsprechend. Zur zusätzlichen Analyse kann die Anregungsfrequenz (Drehgeschwindigkeit) durch das Drehgerät bzw. den fest installierten Stellantrieb variiert werden. Dadurch ergeben sich weitere Möglichkeiten zur Charakterisierung von Armaturen, deren Zuständen und Defekten. Hilfreich wird es zusätzlich sein, von der Antriebsseite her Schallenergie passender Energie und Frequenz bis hin zu kurzen Schallimpulsen hoher Energie in das Antriebsgestänge einzuspeisen. Bei Pulsen kurzer Dauer, d. h. kurz gegen die Laufzeit des Körperschalls im Metall, lassen sich Anregung und Systemantwort im Zeitbereich definiert trennen. Dieses Verfahren ist bekannt (z. B. Radar, Echolot, Materialanalyse), wird aber bisher nicht durch eine Stellvorrichtung (SV) zur Zustandsanalyse einer Armatur eingesetzt. Bei zusätzlicher Schallenergie längerer Dauer erfolgt die Analyse im Frequenzbereich.

Defekte an Spindel oder im Getriebe müssen synchron zur Antriebsfrequenz Schall erzeugen und sich so innerhalb des Schwingungsbildes im niedrigen Frequenzbereich markant zeigen.

Die Amplitude des Körperschalls hängt sowohl bei labilem als bei stabilem Strömungsverhalten von der Medienstromstärke ab, so dass eine hinreichend genaue Messung des Schwingungsspektrums der Armatur, ggf. in Abhängigkeit von ihrer Stellung, einen Rückschluss auf die Medienstromstärke zulässt.

Bei voneinander abweichender Geometrie der beiden Seiten des Restspaltes in Strömungsrichtung im Bereich des Entstehens der oben (Z. 63 ff) geschilderten instabilen Strömung ist ein von der Strömungsrichtung abhängiges Verhalten zu erwarten. Diese Unsymmetrie kann zufällig durch Verschmutzung o. ä. oder gezielt durch konstruktive Gestaltung der Armatur entstehen. Im letzteren Fall kann damit auf die Strömungsrichtung geschlossen werden.

Aus der Analyse des Schallbildes lässt sich unter definierten Bedingungen durch Soll-Ist-Vergleiche der Zustand einer Armatur (AR) herleiten. So sollte eine defekte Spindel oder eine defektes Getriebe beim Bewegen charakteristische Schallemissionen erzeugen. Derlei Analysen sind aus dem Maschinenbau z. B. zur Lager-oder Pumpenüberwachung bekannt, werden aber bisher nicht zur Zustandsanalyse einer Armatur durch eine Stellvorrichtung eingesetzt. Ablagerungen innerhalb der Armatur (AR) sollten beim Stellen aber auch kurz vor dem Schluss beim labilen Strömungsverhalten des Mediums zu einem veränderten Schwingungsbild führen (s. auch Z. 85 f.). Mit wachsenden Erfahrungen hinsichtlich des Schallbildes von Defekten in Armaturen (AR) werden sich durch Vergleich auch ohne Kenntnis des Sollzustands einer Armatur durch Analyse des Schwingungsspektrums qualitative Aussagen über den Zustand treffen lassen.

### Technische Ausführungsbeispiele

Die Erfindung soll an folgenden Ausführungsbeispielen exemplarisch verdeutlicht werden. Es sei darauf hingewiesen, dass es sich bei den folgenden Ausführungsbeispielen nur um mögliche Ausgestaltungen, keinesfalls jedoch um die einzig möglichen Ausgestaltungen handelt.

Eine Stellvorrichtung sowohl als mobiles Drehgerät (AIG) (Abb. 1 und 2) als auch als einer Armatur (AR) fest zugeordneter Stellantrieb (SA) (Abb. 3 und 4) verfügt in jedem Fall über einen durchgängigen metallischen Pfad zum Entstehungsgebiet des Schalls. Dieser kann als Körperschall, beispielsweise durch ein geeignetes Mikrofon oder einen Beschleunigungssensor bzw. einen piezoelektrischen Kristall, nachgewiesen werden. Sobald ein Stellmoment aufgebracht wird, ist jedenfalls kein Spiel in der der Mechanik vorhanden, so dass ein durchgängig guter metallischer Kontakt zwischen Stellvorrichtung (AIG oder SA) und Armatur (AR) gegeben ist. Ggf. kann für Messungen ein statisches Moment, nicht ausreichend zur Drehung der Armaturenspindel, aufgebracht werden, um etwaiges Spiel aus der mechanischen Verbindung zwischen Stellvorrichtung (SV) und Armatur (AR) zu beseitigen.

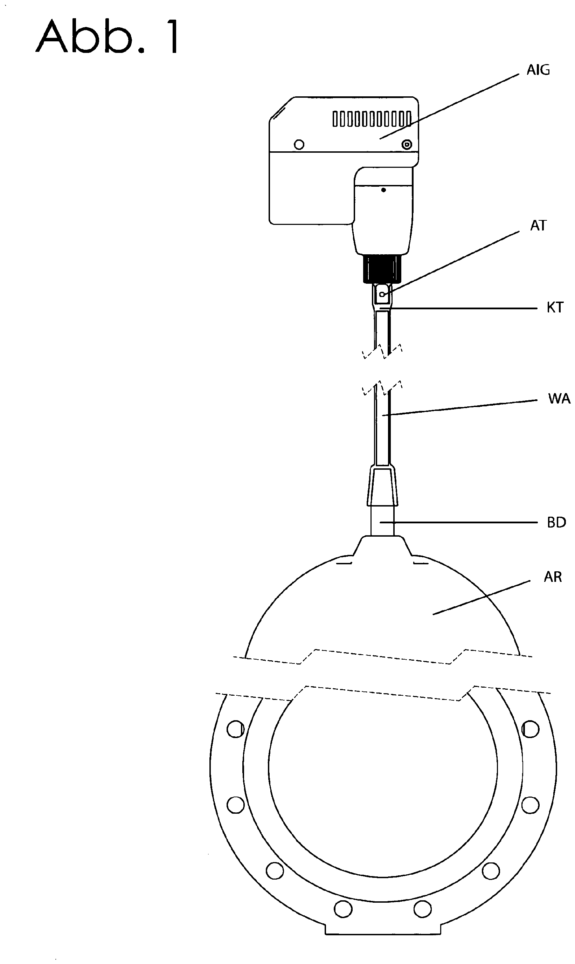

Bei einem mobilen Drehgerät (AIG) erfolgt die Ausbreitung des Körperschalls über folgenden metallischen Weg (Abb. 1): von der Bedienstelle (BD) der Armatur (AR), bspw. einem Vierkant oder einer Welle mit Passfeder, wird der Körperschall auf die separate Welle (WA) des mobilen Drehgerätes (AIG) übertragen. Von dort gelangt der Körperschall über die Kupplung (KT) der separaten Welle (WA) in den Abtrieb (AT) des mobilen Drehgerätes (AIG). Der Abtrieb (AT) des mobilen Drehgerätes besteht aus dem entsprechenden Kupplungsteil und den sich anschließenden mechanischen Bauteilen. In Ausnahmefällen fällt die separate Welle (WA) weg und das mobile Drehgerät wird direkt mit seinem geeignet gestalteten Abtrieb (AT) auf die Bedienstelle (BD) der Armatur gesetzt bzw. ist die separate Welle (WA) als reines Adapterstück zwischen dem Abtriebe (AT) des AIG und der Bedienstelle (BD) der Armatur ausgestaltet.

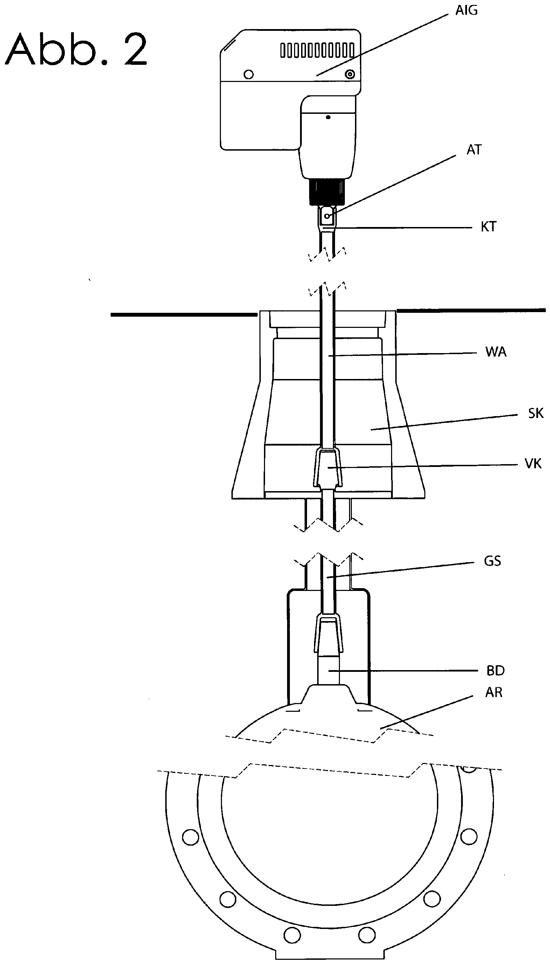

Bei erdverlegten Armaturen (Abb. 2) befindet sich regelmäßig zwischen Bedienstelle (BD) der Armatur (AR) und separater Welle (WA) des mobilen Drehgerätes (AIG) ein Gestänge (GS), auch Erdeinbaugarnitur genannt, das die Bedienstelle (BD) der Armatur (AR) in den Bereich der Erdoberfläche verlängert. Das Gestänge (GS) endet vielfach in einer sogenannten Straßenkappe (SK) und weist an seiner Oberseite ein Kupplungsteil (VK) zur Kraftübertragung, bspw. einen Vierkant, auf. Die separate Welle (WA) des Drehgerätes (AIG) verfügt an seinem der Armatur zugewandten Ende über ein geeignetes Kupplungsstück zum Kupplungsteil (VK) des Gestänges. Für den Fall, dass bei einer erdverlegten Armatur ein Gestänge (GS) nicht verbaut ist, kann die separate Welle auch so gestaltet sein, dass sie direkt an die Bedienstelle der erdverlegten Armatur angreift. Hier bietet sich eine Lösung an, bei der die separate Welle (WA) teleskopartig ausfahrbar gestaltet ist, um eine bessere Transportierbarkeit zu erreichen. Durch geeignete Adapter lässt sich die separate Welle (WA) für eine Vielzahl von Bedienstellen (BD) bzw. Kupplungsteilen (VK) von Gestängen (GS) nutzen.

Mögliche Punkte, an denen ein Schwingungsmessgerät (1) (bspw. Körperschallmikrofon, Beschleunigungssensor, piezoelektrischer Kristall) zur Messung des Körperschalls innerhalb dieses durchgängigen metallischen Pfads bei einem mobilen Drehgerät (AIG) als Stellvorrichtung angebracht sein kann, sind insbesondere folgenden Punkte (Abb. 1 und 2):
- Am Abtrieb (AT) des mobilen Drehgerätes (AIG).
- An dem zur separaten Welle (WA) gehörenden Teil der Kupplung (KT).
- An einer beliebigen sonstigen Stelle der separaten Welle (WA).
- An dem Kupplungsteil (KT) des Gestänges (GS).
- An der Bedienstelle (BT) der Armatur (AR).
- An der Armatur (AR).

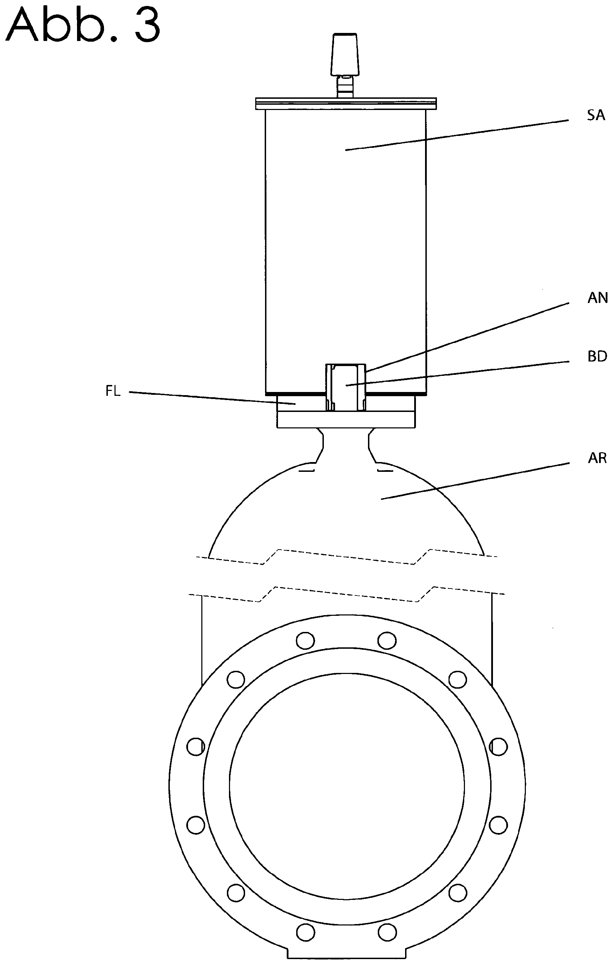

Im Falle eines fest installierten Stellantriebs (SA) erfolgt die Übertragung des Körperschalls weitgehend analog. Der Körperschall der Armatur (AR) gelangt über die Schnittstelle zwischen Armatur (AR) und Stellantrieb (SA), beispielsweise nach DIN EN 5210 oder 5211 ausgestaltet, direkt von der Armatur (AR) über den Flansch (FL) oder über deren Bedienstelle (BD) und die antriebsseitige Aufnahme (AN) direkt in den Stellantrieb SA (Abb. 3). Die Schnittstelle besteht dabei zumeist aus passenden Flanschen auf Armaturen- und Antriebsseite (FL) sowie aus einer zur Bedienstelle (BD) der Armatur passenden Aufnahme (AN) auf Antriebsseite. Denkbar sind allerdings auch andere Schnittstellen, etwa solche ohne Flansch bei denen der Antrieb anderweitig an der Armatur oder einem anderen geeigneten Gegenstand befestigt wird.

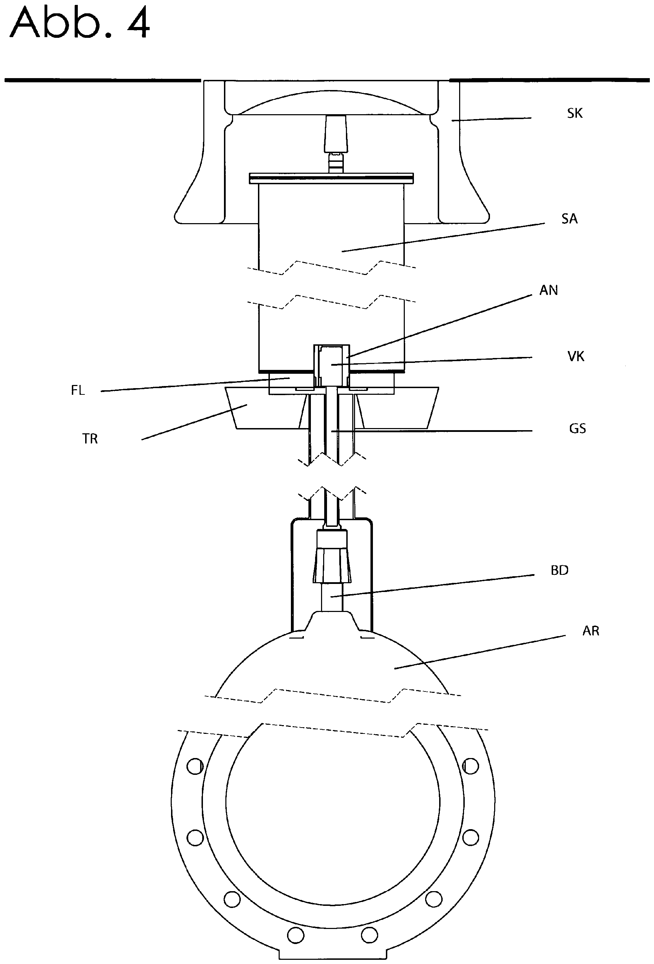

Bekannt ist es, einen Stellantrieb (SA) für eine erdverlegte Armatur (AR) nicht an der Armatur (AR) sondern an einer passenden Trageplatte (TR) oder einem sonstigen zur Reaktionsaufnahme geeigneten Gegenstand zu befestigen. Dann befindet sich zwischen der Bedienstelle (BD) der Armatur (AR) und dem Stellantrieb (SA) ebenfalls ein Gestänge (GS) mit einem passenden Kupplungsteil (VK) zur Aufnahme (AN) des Stellantriebs (SA) über das der Körperschall übertragen wird (Abb. 4).

Mögliche Punkte, an denen ein Schwingungsmessgerät (1) (bspw. Körperschallmikrofon, Beschleunigungssensor, piezoelektrischer Kristall) zur Messung des Körperschalls innerhalb dieses durchgängigen metallischen Pfads bei einem fest installierten Stellantrieb (SA) als Stellvorrichtung angebracht werden kann, sind insbesondere folgenden Punkte (vgl. Abb. 3 und 4):
- Am Flansch (FL) des Stellantriebs (SA) sowohl innerhalb als auch außerhalb der Antriebshülle.
- Am zum Flansch (FL) der Armatur passenden Flansch der Armatur (AR).
- An der Bedienstelle (BD) der Armatur (AR).
- Am Kupplungsteil (VK) des Gestänges (GS).
- An der Armatur (AR).

Werden das Schwingungsmessgerät (1) sowie der ggf. erforderliche Verstärker (2) außerhalb der Stellvorrichtung angeordnet, etwa an der Bedienstelle (BD) der Armatur, am Flansch (FL) von Stellantrieb (SA) oder Armatur (AR) oder an dem Abtrieb (AT) des AIG, muss der Signalweg (3) mittels einer geeigneten Kabeldurchführung durch das Gehäuse der Stellvorrichtung geführt werden.

Im Folgenden werden Ausführungsbeispiele für die technische Ausgestaltung der Aufnahme der Schwingungen der Armatur (AR) in Abhängigkeit von der Art der Anregung sowie der Schwingungsanalyse innerhalb einer Stellvorrichtung, also einem Drehgerät (AIG) oder Stellantrieb (SA), aufgezeigt.

Sowohl bei einem Stellantrieb (SA, Abb. 3 und 4), als auch bei einem Drehgerät (AIG, Abb. 1 und 2) wird das Schwingungsmessgerät (1) zweckmäßigerweise möglichst dicht an der Armatur (AR) angebracht. Falls durchführbar, ist eine direkte Aufnahme an der Armatur (AR) vorzugswürdig. Besonders vorzugswürdig ist es, das Schwingungsmessgerät (1) dort an der Armatur anzubringen, wo beim Schließen die laminare Strömung auftritt. Bei einem Schieber ist dies dessen Unterseite. Um einen allgemeinen Einsatz zu ermöglichen, kann das Schwingungsmessgerät (1) auch an den anderen oben aufgezeigten Punkten der durchgängig metallischen Verbindung angebracht werden, wobei mit entsprechend geringeren Amplituden zu rechnen ist.

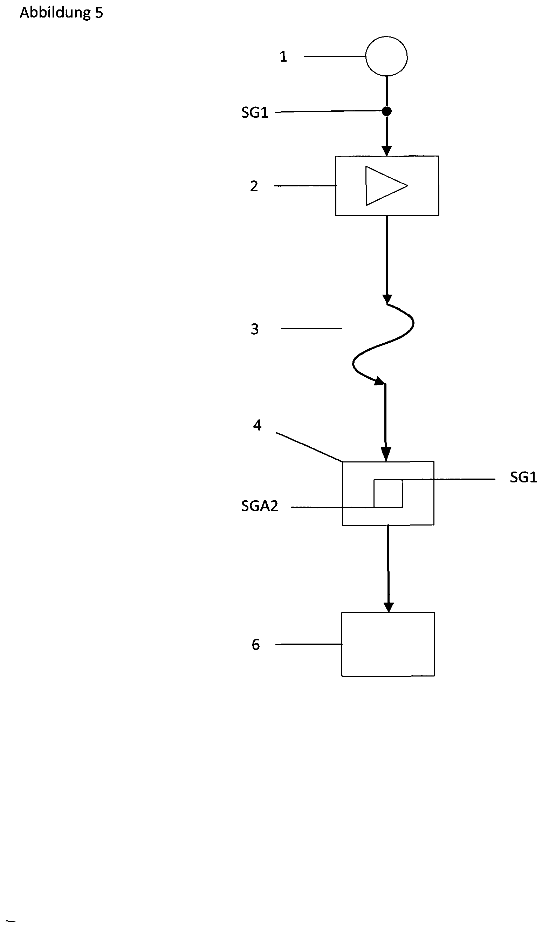

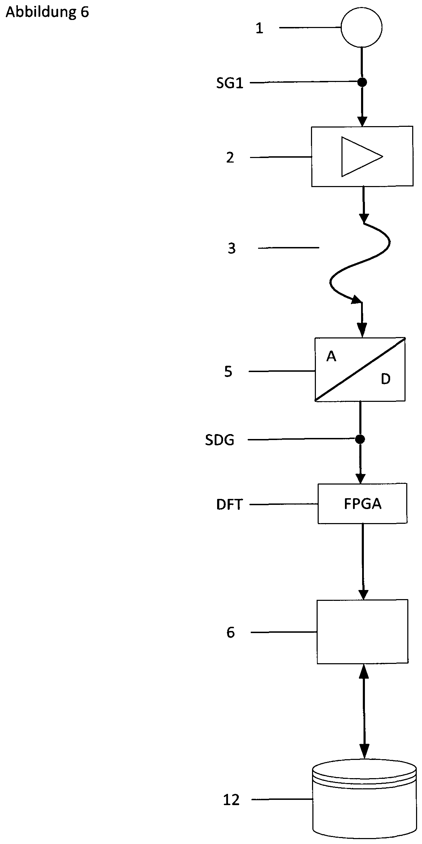

Zur Auswertung des Signals SG1 des Schwingungsmessgerätes (1) wird dieses in einem geeigneten Verstärker (2) für die nachfolgende Übertragung über die Übertragungsstrecke (3) und zur Analyse in der Verarbeitungseinrichtung (6) zur Auswertung des Signals des Körperschall-Aufnehmers zunächst verstärkt (Abb. 5, 6).

Die Analyse in der Verarbeitungseinrichtung (6) zur Auswertung des Signals des Körperschall-Aufnehmers erfolgt innerhalb des Gehäuses der Stellvorrichtung. Externe Analysegeräte werden nicht benötigt. Bei der Verarbeitungseinrichtung (6) zur Auswertung des Signals des Körperschall-Aufnehmers handelt es sich um einen programmierten Rechner (6) innerhalb der Stellvorrichtung, der über die Stromversorgung der Stellvorrichtung betrieben sein. Bei dem Rechner kann es sich um den Steuerrechner der Stellvorrichtung oder über einen externen Rechner handeln, der über eine geeignete Schnittstelle mit dem Steuerrechner verbunden ist. Vorzugswürdig ist die Analyse im Steuerrechner, um das System insgesamt schlanker zu gestalten. Allerdings ist, je nach Aufwand der Schwingungsanalyse darauf zu achten, dass die Verarbeitungseinrichtung (6) hinreichend leistungsstark gewählt ist.

In einem ersten Ausführungsbeispiel der Signalanalyse des Signals SG1 (Abb. 5) erfolgt nur eine Bewertung nach summarischer Amplitude und Zeitverlauf. Der Diskriminator (4) weist die Überschreitung einer vorzugswürdig einstellbaren Schwelle der Schallamplitude SGA1 nach, die z. B. kurz vor dem Schließen auftritt. Sobald dieser Pegel danach unter eine zweite Schwelle der Schallamplitude SGA1 gefallen ist, kann bei passender Einstellung die Armatur als geschlossen betrachtet werden. Eine weitere Analyse unterbleibt. Der Stellantrieb kann abgeschaltet werden.

In einem zweiten Ausführungsbeispiel ermittelt die Verarbeitungseinrichtung (6) ohne zwischengeschalteten Diskriminator (4) direkt das Signal SG1 des Schwingungsmessgerätes (1) nach einer A-D-Wandlung auf. Den dichten Schluss der Armatur kann die Verarbeitungseinrichtung (6) bei geeigneter Programmierung durch einen signifikanten Abfall der Amplitude des Körperschalls erkennen. Bereits in bei diesem Ausführungsbeispiel können möglicherweise dann Aussagen über Typ oder Hersteller gemacht werden, wenn die Schwingungsanregung durch die zunehmend nichtlaminare Strömung beim Schließen zu mehr als einem Schwingungsmaximum der Armatur (Resonanz) führt. In diesem Fall kann die Lage der Schwingungsmaxima in Abhängigkeit vom Stellweg zu den gewünschten Aussagen führen, wenn entsprechende Vergleichsmessungen zur Verfügung stehen.

In einem dritten Ausführungsbeispiel der Signalanalyse wird das Signal SG1 des Schwingungsmessgerätes (1) nach dem Verstärker (2) und der Übertragungsstrecke (3) einer qualitativen und quantitativen Analyse unterzogen (Abb. 6). Damit lassen sich Störungen ausblenden, die zum Versagen der Signalanalyse des ersten beiden Ausführungsbeispiel führen können, bspw. Betriebsgeräusch der Stellvorrichtung, Straßenlärm, Baulärm, o. ä. Nach der Übertragungsstrecke (3) wird das Signal SG1 beispielsweise mit einem A/D- Wandler mit ausreichender Auflösung (5) digitalisiert. Aus technischer Zweckmäßigkeit heraus kann die Digitalisierung (5) auch vor der Übertragungsstrecke (3) liegen. Das digitalisierte Signal (SGD) wird anschließend einer Frequenzanalyse, zweckmäßigerweise einer diskreten Fourieranalyse (DFT), unterzogen. Der Analysebereich muss dabei nicht auf das hörbare Frequenzband begrenzt werden. Insbesondere bei gasförmigen Medien sind auch höhere Frequenzen zu erwarten. Danach liegen detaillierte Daten über Frequenzen, Amplituden als Funktion der Zeit bzw. des Stellwegs in einer Matrix M1(f, a, t)n vor, wobei f für Frequenz, a für die Amplitude und t für Zeit bzw. den Stellweg stehen. Die Ordnungszahl n kennzeichnet in einer Reihe eine Gruppe von Daten, die in zweckmäßiger und gleichbleibender Anzahl zusammengefasst und nach dem Intervall T*n zwischengespeichert werden (T ist der Zeitraum, in dem die Gruppe der Daten zum gemeinsamen Abspeichern entsteht). f, a und t bilden die Basis von Analysen entsprechend den oben dargestellten physikalischen Zusammenhängen. Durch Vergleich der Zeit- oder Weg- oder Frequenzverläufe des Signals beim Stellen oder in einer statischen Position sowie optional dem Vergleich mit historischen Daten aus einer Datenbank (12) oder zeitlich kurz zuvor liegenden Spektren derselben Armatur können störende Schallquellen ausgeschlossen werden. Dem Stand der Technik entsprechend erfolgt die Verarbeitung des digitalen Signals (SGD) in der Verarbeitungseinrichtung (6). Lediglich aus technischer Zweckmäßigkeit heraus kann die diskrete Fourieranalyse (DFT) des Signals (SGD) in einem passenden FPGA (Field Programmable Gate Array) erfolgen (Abb. 6). Denn die Durchführung einer diskreten Fourieranalyse ist verhältnismäßig rechenaufwendig. Auf diese Weise ist ein signifikanter Geschwindigkeitsgewinn möglich. Im Folgenden wird nicht mehr zwischen analoger und digitaler Darstellung eines Signals unterschieden.

Zum Ende des Schließvorgangs treten entsprechend der Erläuterungen in Z. 63 ff. neue Frequenzen im Spektrum auf. Deren Zeitverlauf lässt das Schließen der Armatur (AR) mit höherer Sicherheit folgern, als im ersten Ausführungsbeispiel der Signalanalyse. Mit der Hypothese, dass die Schallquelle im Innern der Armatur ein weißes Rauschen, oder zumindest ein bekanntes farbiges Rauschen besitzt, kann aus den gemessenen Spektren der Frequenzgang der Armatur (AR) im Rechner (6) errechnet werden. Die Interpretation der Ergebnisse in Hinblick auf die Aussagen über:
- Zustand der Armatur sowie
- Typ, Hersteller, Baujahr der Armatur
(vgl. Zeilen 59 - 62) erfolgt empirisch im Vergleich mit einer hinreichend großen Datenbasis (12) bekannter Armaturen (AR) und deren Korrelation zwischen Schallbild und Zustand. Eine geeignete Software, die auf dem Rechner (6) läuft, führt diesen Datenvergleich durch und liefert eine Zusammenfassung der Analyse. Ohne vorhandene Datenbasis sind Aussagen aufgrund von theoretisch vorhersagbaren Annahmen möglich.

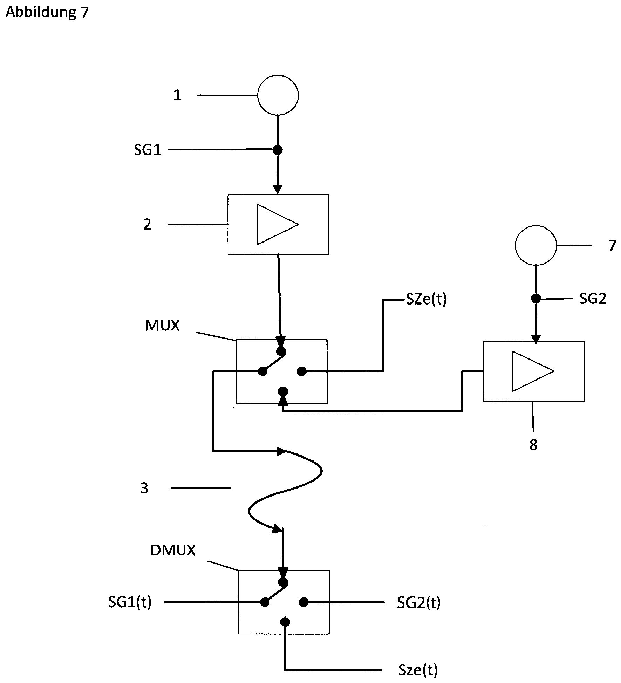

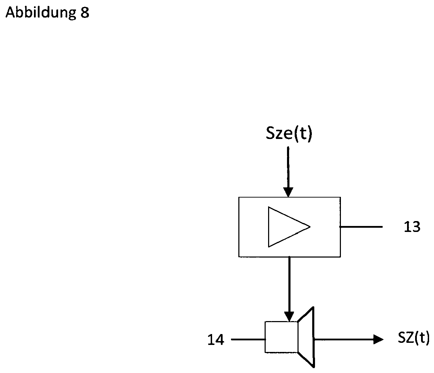

In einem vierten Ausführungsbeispiel der Signalanalyse wird nicht nur Schall analysiert, der durch interne Vorgänge in der Armatur (AR) erzeugt wird (SG1), sondern es wird zusätzlich die Antwortfunktion von Schallenergie einer Erregungsfunktion SE(t) = SZ(t) + SA(t) oder SE (t) = SZ(t) + AIG(t) betrachtet, die von der Stellvorrichtung in die Armatur eingekoppelt wird (Abb. 7, 8). Diese Erregungsfunktion setzt sich aus der Schallenergie des Antriebs SA (t) oder AIG(t) und einer zusätzlichen Schalleinkopplung SZ(t) zusammen. Selbstverständlich ist auch eine Messung völlig ohne durch das Medium oder das Stellen der Armatur angeregten Schall möglich, also der Fall SA(t) bzw. AIG(t) gleich null. Die Zeitfunktion der Schalleinkopplung SZe(t) wird im Rechner (6) erzeugt und über die Übertragungsstrecke (3) zum Verstärker (13) geführt (Abb. 8). Vom Verstärker (13) wird der Wandler (14) versorgt, der in bekannter Weise das akustische Signal SZ(t) erzeugt und in geeigneter Weise in den Antriebsstrang einkoppelt. Die zusätzliche Schallenergie macht Frequenzbereiche messbar, die ohne diese Einspeisung z. B wegen fehlender Energie passender Frequenz nicht zu einer Antwort angeregt werden.

Die Erregungsfunktion SE(t) wird in Amplitude und Phase als bekannt betrachtet. Um Toleranzen und andere Abweichungen vom theoretischen Wert auszugleichen, wird die Erregungsfunktion über den Schallaufnehmer (7) nahe der Einspeisestelle der Erregungsfunktion gemessen und im Auswertungsgang als SG2(t) genutzt. Die Armatur (AR) ist akustisch lose angekoppelt und wird daher nicht durch diese Einspeisung in ihrem charakteristischen Verhalten beeinflusst. Die stationäre Antwortfunktion SG1(t) wird durch den Schallaufnehmer (1) nicht an der Einspeisestelle von SE(t) aufgenommen. SG1(t) ist die Summe zweier Antwortfunktionen SG2(t)*G1(f) und SG2(t)*G2(f). G1(f) und G2(f) sind die Übertragungsfunktionen, die die Erregungsfunktion SG2(t) mit dem Antwortsignal nach Betrag und Phase verknüpfen. Die Übertragungsfunktion G2(f) kennzeichnet den Signalweg zwischen der Einspeisestelle von SE(t) und dem Schallaufnehmer (1). G2(f) ist bekannt und ungleich 1, das heißt SG1(t) ist ungleich SG2(t) auch dann, wenn keine Armatur (AR) angekoppelt ist. Technisch ist dies beispielsweise zu erreichen durch das akustische Tiefpassverhalten einer Kupplung und / oder durch Laufzeiten der Schallenergie im Signalpfad zwischen Schallaufnehmer (7) und (1). G1(f) ist unbekannt und die gesuchte Charakteristik der Armatur (AR). Die Zusammenfassung von zeit- und frequenzabhängigen Variablen erfolgt hier nur um die physikalischen Zusammenhänge darzustellen. Die Auswertung erfolgt im Rechner (6) mit den geeigneten mathematischen Methoden nach der Fourieranalyse der Zeitfunktionen SG1(t) und SG2(t) im Frequenzbereich.

Durch den Schallaufnehmer (7) wird SE(t) in das Signal SG2(t) gewandelt (Abb. 7). Das Signal SG2(t) durchläuft den Verstärker (8), den Multiplexer (MUX), die Übertragungsstrecke (3) und steht nach dem Demultiplexer (DMUX) wieder als Signal SG2(t) zur Verfügung.

Aus dem Zusammenhang SG1(t)=G1(f)*SG2(t)+SG2(t)*G2(f) folgt dir gesuchte Charakteristik G1(f)=SG1(t)/SG2(t) - G2(f), die weiter analysiert wird. Der Frequenzgang des Systems lässt sich mit ausreichender Genauigkeit als Betrag von G1(f) ermitteln. Das weitere Vorgehen entspricht dem in den Z. 245 ff beschriebenen Ansatz. Die Auswertung erfolgt zweckmäßig analog zum zweiten Ausführungsbeispiel der Signalanalyse.

In einem fünften Ausführungsbeispiel der Signalanalyse wird ebenfalls Schallenergie durch die Stellvorrichtung in die Armatur eingespeist (Abb. 8). Die Trennung von Anregungs- und Antwortfunktion erfolgt im Zeitbereich. Analog dem in den Zeilen 290 ff. beschriebenen Vorgehen werden kurze, leistungsstarke Pulse als **SZ(t)** erzeugt, beispielsweise 10 Mikrosekunden mit 1 - 2 mWs und konstanter oder variabler Wiederholfrequenz. Diese Pulse werden wie im vierten Ausführungsbeispiel dargestellt eingekoppelt (Abb. 8). Der Verstärker (2) wird während des Anregungspulses in geeigneter Weise vom Schwingungsmessgerät (1) getrennt und sein Eingang auf null gelegt (Austastung), damit er nicht übersteuert. Nach der Abklingzeit des Schwingungsmessgeräts (1) von etwa 50 Mikrosekunden, wird der Verstärker (2) wieder verbunden und kann das Signal der abklingenden Schallenergie verstärken und wie im Ausführungsbeispiel 3 beschrieben der Analyse zuführen. Hier wird nur das Signal **SG1(t)** erzeugt und ausgewertet. Das Spektrum der Anregungsfunktion ist Dirac-ähnlich und ist daher bekannt. Mit dieser Information ist wiederum ein der Armatur spezifisch zugeordneter Frequenzgang zu bestimmen. Eine Auswertung erfolgt analog zu den Ausführungsbeispielen drei und vier.

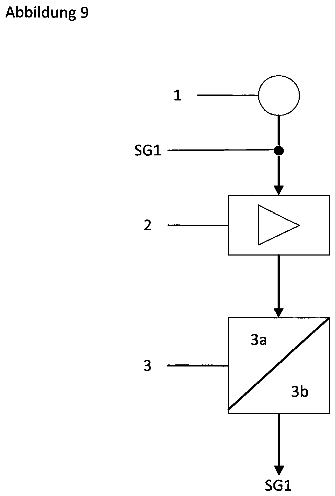

Werden das Schwingungsmessgerät (1) und der Verstärker (2) darüber hinaus an der sich drehenden separaten Welle (WA) eines mobilen Drehgeräts (AIG) bzw. dem Kupplungsteil (VK) eines Gestänges (GS) angebracht, muss der Signalweg (3) an zumindest einem Punkt drahtlos und bidirektional gestaltet werden. Er wird dort zweckmäßigerweise in einen beweglichen Teil (3a) und einem festen Teil (3b) zum feststehenden weiteren Analyseweg an (Abb. 9). Die drahtlose Übertragung erfolgt vorzugsweise induktiv. Danach steht das Signal SG1 oder SG2 wieder zur Verfügung. Die nachfolgende Analyse erfolgt dann wie oben beschrieben.

## Patentansprüche

1. Stellvorrichtung für Armaturen (AR) zum Unterbrechen des Mediumflusses in einer Rohrleitung in Wasser-, Abwasser-, Gas-, Fernwärme-, Fernkälte- und Öltransportleitungen, mit
- einem Drehantrieb;
- einer Steuereinrichtung zur Steuerung des Drehantriebes;
- einem Körperschall-Aufnehmer (1), der ausgestaltet ist, von der Armatur (AR) kommenden Körperschall zu messen; und
- einer Verarbeitungseinrichtung (6) zur Auswertung des Signals des Körperschall-Aufnehmers (1);
**dadurch gekennzeichnet, dass**
- die Steuereinrichtung eingerichtet ist, die Drehgeschwindigkeit und dadurch eine entsprechende Antriebsfrequenz des Drehantriebes zu variieren, sodass variabler Schall des Antriebes in die Armatur einkoppelt;
- die Stellvorrichtung außerdem einen Schwingungsgeber aufweist, der eingerichtet ist, zusätzlichen Schall in die Armatur einzukoppeln; und
- die Verarbeitungseinrichtung (6) ausgestaltet ist, eine Frequenzanalyse des gemessenen Körperschalls durchzuführen, derart, dass durch Soll-Ist-Vergleiche der Zustand der Armatur herleitbar ist.

2. Stellvorrichtung nach Anspruch 1, **dadurch gekennzeichnet, dass** die Stellvorrichtung als mobiles Drehgerät (AIG) ausgestaltet ist.

3. Stellvorrichtung nach Anspruch 1, **dadurch gekennzeichnet, dass** die Stellvorrichtung als fest einer Armatur (AR) zugeordneter Stellantrieb (SA) ausgestaltet ist.

4. Stellvorrichtung nach einem der Ansprüche 1 bis 3, **dadurch gekennzeichnet, dass** die Verarbeitungseinrichtung (6) ausgestaltet ist, die Amplitude des durch den Körperschall-Aufnehmer (1) gemessenen Körperschalls zu bestimmen.

5. Stellvorrichtung nach einem der Ansprüche 1 bis 4, **dadurch gekennzeichnet, dass** die Stellvorrichtung zusätzlich über eine Datenbank (12) mit bekannten Schallbildern von Armaturen verfügt und die Verarbeitungseinrichtung (6) ausgestaltet ist, die gemessenen und ausgewerteten Signale des Körperschall-Aufnehmers (1) mit den in der Datenbank (12) gespeicherten Schallbildern zu vergleichen.

6. Stellvorrichtung nach einem der Ansprüche 1 bis 5, **dadurch gekennzeichnet, dass** die Stellvorrichtung ausgestaltet ist, das Signal des Körperschall-Aufnehmers (1) vor der Auswertung durch die Verarbeitungseinrichtung (6) von einem analogen Signal in ein digitales Signal zu wandeln.

7. Stellvorrichtung nach einem der Ansprüche 1 bis 6, **dadurch gekennzeichnet, dass** die Frequenzanalyse des Signals des Körperschall-Aufnehmer (1) in einem Field Programmable Gate Array (FPGA) erfolgt.

8. Stellvorrichtung nach einem der Ansprüche 1 bis 7, **dadurch gekennzeichnet, dass** die Frequenzanalyse mittels einer diskreten Fourier-Analyse (DFT) erfolgt.

9. Stellvorrichtung nach einem der Ansprüche 1 bis 8, **dadurch gekennzeichnet, dass** sowohl die Steuereinrichtung zur Steuerung des Antriebes als auch die Verarbeitungseinrichtung (6) zur Auswertung des Signals des Körperschall-Aufnehmers (1) innerhalb des Gehäuses der Stellvorrichtung angeordnet sind.

10. Stellvorrichtung nach einem der Ansprüche 1 bis 9, **dadurch gekennzeichnet, dass** die Verarbeitungseinrichtung (6) zur Auswertung des Signals des Körperschall-Aufnehmers (1) nicht aber die Steuereinrichtung zur Steuerung des Antriebes innerhalb des Gehäuses der Stellvorrichtung angeordnet ist.

11. Verfahren zur Überprüfung des Schließzustandes einer Armatur mit den Schritten:
- Betätigen der Armatur mit einer Stellvorrichtung gemäß einem der Ansprüche 1 bis 1044 und gleichzeitig,
- Messen des vom durch die Armatur fließenden Mediums oder vom Stellen der Armatur angeregten Körperschalls,
- Vergleichen der Körperschallamplitude mit einem Schwellwert, wobei die Armatur als geschlossen bewertet wird, wenn die Körperschallamplitude unter dem Schwellwert liegt.

12. Verfahren zur Zustandsbestimmung einer Armatur mit den Schritten:
- Betätigen der Armatur mit einer Stellvorrichtung gemäß einem der Ansprüche 1 bis 1044 und gleichzeitig,
- Messen des vom durch die Armatur fließenden Mediums oder vom Stellen der Armatur angeregten Körperschalls,
- Vergleichen des gemessenen Körperschalls mit früheren Messungen des Körperschalls an derselben Armatur (AR) oder an anderen Armaturen (AR).

13. Verfahren gemäß Anspruch 11 oder 12 wobei der gemessene Körperschall zusätzlich einer Frequenzanalyse unterzogen wird.

## Claims

1. An actuating device for valves (AR) for interrupting the flow of medium in a pipeline in water, waste water, gas, district heating, district cooling and oil transport lines comprising
- a rotating drive;
- a control device for controlling the rotating drive;
- an structure-borne sound sensor (1) which is configured to measure structure-borne sound coming from the valve (AR); and
- a processing device (6) for evaluating the signal from the structure-borne sound sensor (1);
**characterized in that**
- the control device is adapted to vary the rotational speed and, as a result, a corresponding drive frequency of the rotating drive such that variable sound of the drive is coupled into the valve;
- the actuating device additionally comprises a vibration generator that is configured to couple additional sound into the valve; and
- the processing device (6) is configured to perform a frequency analysis of the measured structure-borne sound such that the state of the valve can be deduced through target-actual comparisons.

2. The actuating device according to Claim 1, **characterized in that** the actuating device is configured as a mobile rotating device (AIG).

3. The actuating device according to Claim 1, **characterized in that** the actuating device is configured as an actuating drive (SA) fixedly assigned to a valve (AR).

4. The actuating device according to one of Claims 1 to 3, **characterized in that** the processing device (6) is configured to determine the amplitude of the structure-borne sound measured by the structure-borne sound sensor (1).

5. The actuating device according to one of Claims 1 to 4, **characterized in that** the actuating device additionally has a database (12) with known sound patterns of valves and the processing device (6) is configured to compare the measured and evaluated signals from the structure-borne sound sensor (1) with the sound patterns stored in the database (12).

6. The actuating device according to one of Claims 1 to 5, **characterized in that** the actuating device is configured to convert the signal from the structure-borne sound sensor (1) from an analog signal into a digital signal before evaluation by the processing device (6).

7. The actuating device according to one of Claims 1 to 6, **characterized in that** the frequency analysis of the signal from the structure-borne sound sensor (1) takes place in a field programmable gate array (FPGA).

8. The actuating device according to one of Claims 1 to 7, **characterized in that** the frequency analysis is carried out using a discrete Fourier analysis (DFT).

9. The actuating device according to one of Claims 1 to 8, **characterized in that** both the control device for controlling the drive and the processing device (6) for evaluating the signal from the structure-borne sound sensor (1) are arranged within the housing of the actuating device.

10. The actuating device according to one of Claims 1 to 9, **characterized in that** the processing device (6) for evaluating the signal from the structure-borne sound sensor (1) but not the control device for controlling the drive is arranged within the housing of the actuating device.

11. A method for checking the closure state of a valve, comprising the steps:
- actuating the valve with an actuating device according to one of Claims 1 to 10 and, at the same time,
- measuring the structure-borne sound excited by the medium flowing through the valve or by the adjustment of the valve,
- comparing the structure-borne sound amplitude with a threshold value, wherein the valve is determined as closed if the structure-borne sound amplitude is below the threshold value.

12. A method for determining the state of a valve, comprising the steps:
- actuating the valve with an actuating device according to one of Claims 1 to 10 and at the same time,
- measuring the structure-borne sound excited by the medium flowing through the valve or by the adjustment of the valve,
- comparing the measured structure-borne sound with earlier measurements of the structure-borne sound on the same valve (AR) or on other valves (AR).

13. The method according to Claim 11 or 12, wherein the measured structure-borne sound is additionally subjected to a frequency analysis.

## Revendications

1. Dispositif de réglage de robinetteries (AR), destiné à interrompre le flux de fluide dans une tuyauterie dans des conduites d'eau, d'eaux usées, de gaz, de chauffage urbain, de refroidissement urbain et de transport de pétrole, comprenant
- un entraînement en rotation ;
- un système de commande, destiné à commander l'entraînement en rotation ;
- un capteur (1) de bruits structurels, qui est conçu pour mesurer des bruits structurels provenant de la robinetterie (AR) ; et
- un système de traitement (6), destiné à évaluer le signal du capteur (1) de bruit structurels ;
**caractérisé en ce que**
- le système de commande est configuré pour faire varier la vitesse de rotation et de ce fait une fréquence d'entraînement correspondante de l'entraînement en rotation, de sorte que des bruits variables de l'entraînement soient injectés dans la robinetterie ;
- le dispositif de réglage comporte par ailleurs un émetteur de vibrations qui est configuré pour injecter des bruits supplémentaires dans la robinetterie ; et
- le système de traitement (6) est conçu pour procéder à une analyse de fréquence des bruits structurels mesurés, de telle sorte que par des comparaisons entre l'état visé et l'état réel, l'état de la robinetterie puisse être déduit.

2. Dispositif de réglage selon la revendication 1, **caractérisé en ce que** le dispositif de réglage est conçu sous la forme d'un appareil de rotation (AIG) mobile.

3. Dispositif de réglage selon la revendication 1, **caractérisé en ce que** le dispositif de réglage est conçu sous la forme d'un actionneur (SA) fixement affecté à une robinetterie (AR).

4. Dispositif de réglage selon l'une quelconque des revendications 1 à 3, **caractérisé en ce que** le système de traitement (6) est conçu pour déterminer l'amplitude des bruits structurels mesurés par le capteur (1) de bruits structurels.

5. Dispositif de réglage selon l'une quelconque des revendications 1 à 4, **caractérisé en ce que** le dispositif de réglage dispose additionnellement d'une base de données (12) comprenant des images sonores connues de robinetteries et le système de traitement (6) est conçu pour comparer les signaux mesurés et évalués du capteur (1) de bruits structurels avec les images sonores mémorisées dans la base de données (12).

6. Dispositif de réglage selon l'une quelconque des revendications 1 à 5, **caractérisé en ce que** le dispositif de réglage est conçu pour convertir le signal du capteur (1) de bruits structurels avant l'évaluation par le système de traitement (6) d'un signal analogique en un signal numérique.

7. Dispositif de réglage selon l'une quelconque des revendications 1 à 6, **caractérisé en ce que** l'analyse de fréquence du signal du capteur (1) de bruits structurels s'effectue dans un Field Programmable Gate Array (réseau de portes programmables in situ - FPGA).

8. Dispositif de réglage selon l'une quelconque des revendications 1 à 7, **caractérisé en ce que** l'analyse de fréquence s'effectue au moyen d'un analyse de Fourier discrète (OFT).

9. Dispositif de réglage selon l'une quelconque des revendications 1 à 8, **caractérisé en ce qu'**aussi bien le système de commande destiné à commander l'entraînement qu'également le système de traitement (6) destiné à évaluer le signal du capteur (1) de bruits structurels sont placés à l'intérieur du boîtier du dispositif de réglage.

10. Dispositif de réglage selon l'une quelconque des revendications 1 à 9, **caractérisé en ce que** le système de traitement (6) destiné à évaluer le signal du capteur (1) de bruits structurels, mais pas le système de commande destiné à commander l'entraînement est placé à l'intérieur du boîtier du dispositif de réglage.

11. Procédé, destiné à vérifier l'état de fermeture d'une robinetterie, comprenant les étapes consistant à :
- actionner la robinetterie à l'aide d'un dispositif de réglage selon l'une quelconque des revendications 1 à 10 et simultanément,
- mesurer les bruits structurels suscités par le fluide circulant à travers la robinetterie ou par le réglage de la robinetterie,
- comparer l'amplitude des bruits structurels avec une valeur seuil, la robinetterie étant évaluée comme étant fermée lorsque l'amplitude des bruits structurels est inférieure à la valeur seuil.

12. Procédé, destiné à déterminer l'état d'une robinetterie, comprenant les étapes consistant à :
- actionner la robinetterie à l'aide d'un dispositif de réglage selon l'une quelconque des revendications 1 à 10 et simultanément,
- mesurer les bruits structurels suscités par le fluide circulant à travers la robinetterie ou par le réglage de la robinetterie,
- comparer les bruits structurels mesurés avec des mesures précédentes des bruits structurels sur la même robinetterie (AR) ou sur d'autres robinetteries (AR).

13. Procédé selon la revendication 11 ou 12, les bruits structurels mesurés étant soumis additionnellement à une analyse de fréquence.
